# EUROPEAN PATENT APPLICATION

(11) **EP 1 615 165 A1**
(43) Date of publication of application: **11.01.2006**
(21) Application number: 04291848.2
(22) Date of filing: 07.07.2004
(51) Int. Cl.: G06K 19/077

(54) **Chip card with prevention of crack propagation in the card body**

(71) Applicant: Axalto SA, 92120 Montrouge (FR)
(72) Inventor: Provost, Stéphane, 92120 Montrouge (FR); Deloche, Manuel, 92120 Montrouge (FR); Billard, Olivier, 92120 Montrouge (FR)

(57) **Abstract**

A chip card comprises a card body with a recess (10) formed therein and a chip module embedded in the recess. The recess includes two concentric cavities with an upper cavity (12) and a lower cavity (14), the upper cavity having a peripheral outline corresponding to the peripheral outer shape of the module and the lower cavity having a peripheral outline the dimensions of which are smaller than the respective dimensions of the upper cavity so as to form a peripheral shoulder supporting the backside of the chip module. The recess further includes at least one stress-relieving cavity in communication with the inner space of the recess (10), such as a notch (32) in communication with the lower cavity (14).

## Description

### BACKGROUND OF THE INVENTION

### Field of the invention

The present invention generally relates to chip cards, in particular the design of card bodies in which chip modules are embedded.

### Background art

More specifically, a chip card is comprised of a card body made out from plastics, in which a recess or cavity has been formed for receiving a chip module.

In the manufacturing process, the milling step consists in forming a recess the dimensions of which are adapted to the chip module to be embedded in the recess. The recess actually includes two concentric cavities with an upper cavity and a smaller, lower cavity. The dimensions of the upper cavity are chosen to be slightly larger than the outer dimensions of the chip module, whereas the dimensions of the lower cavity are adapted to house the chip supported on the backside of the module, which chip is coated with a mass of protective resin. The dimensional difference between the two cavities defines in cross-section a stepped profile forming a flat peripheral shoulder on which the backside of the module is bonded to the card body, typically by means of a holt-melt adhesive or a liquid glue such as cyanoacrylate glue, when embedding the module into the card body in a further manufacturing step.

The position of the recess on the card body should be adapted to the geometry of the chip module so as to meet ISO standards, specifically ISO 7816-2 which defines the position of the contacts of the chip module with respect to the nearest orthogonal edges of the card.

This results in the proximal edge of the chip module parallel to the longest side of the card being very close to the central line of the card body (i.e. the symmetry axis of the card which is parallel to the longest side thereof). But this central line is also the line of maximum stress within the card when the card is bent across its width. So when the card is repeatedly or excessively bent a crack may appear in the plastic at this location on the reverse side of the card (namely on the side opposed to the one receiving the chip module) and progressively propagates over the thickness of the card eventually reaching the front side of the card, in the reduced thickness area corresponding to the lower cavity. This crack is the starting point of a fracture which expands over the length of the card, eventually leading to a possible breakage of the card. The wearing of the card depends on the modulus of elasticity of the plastic material constituting the card body, however irrespective of the material used the phenomenon always appears and develops the same way.

### SUMMARY OF THE INVENTION

It is therefore an object of the invention to provide a chip card protected against the propagation of cracks that may appear in the area of the recess receiving the chip module, in the vicinity of the central line of the card.

The invention is generally applicable to a chip card comprising a card body with a recess formed therein and a chip module embedded in the recess, wherein said recess includes two concentric cavities with an upper cavity and a lower cavity. The upper cavity has a peripheral outline corresponding to the peripheral outer shape of the module and the lower cavity has a peripheral outline the dimensions of which are smaller than the respective dimensions of the upper cavity so as to form a peripheral shoulder supporting the backside of the chip module.

According to the invention, the recess further includes at least one stress-relieving cavity in communication with the inner space of the recess. Such stress-relieving cavity may in particular comprise a notch in communication with the lower cavity.

Generally, the recess is located at a position offset with respect to the centre line of the card body, in which case, the notch having a distal end and a proximal end defining a main axis extending in the plane of the card body, the main axis of the notch preferably extends towards said centre line.

According to several preferential embodiments:
- in a direction orthogonal to the plane of the card body, the notch extends substantially over the depth of the lower cavity;
- the recess having a substantially square or rectangular shape, it includes at least two distinct stress-relieving cavities, said cavities being in communication with the inner space of the recess on the same lateral side of said recess;
- the notch having a distal end and a proximal end defining a main axis extending in the plane of the card body, said proximal end is in communication with the lower cavity, in particular substantially located at the outline of the lower cavity, and/or said distal end is substantially located at the outline of the upper cavity;
- the recess having a substantially square or rectangular shape, the distal end of the notch is located in the vicinity of a corner of the corresponding square or rectangle; in particular, the main axis of the notch may extend diagonally with respect to the shape of the recess or, alternatively, in a direction orthogonal to a lateral side of the recess.

### BRIEF DESCRIPTION OF THE DRAWINGS

The foregoing and other objects, aspects and advantages of the invention will be better understood from the following detailed description of a preferred embodiment of the invention with reference to the appended drawings, in which the same numerals refer to identical or functionally similar features over the different figures.
Figure 1 is a plan view of the recess formed in a chip card body according to the prior art.
Figure 2 is a partial, side elevation cutaway of a card body and a chip module illustrating how this module is embedded in the recess of the card body.
Figure 3 is a plan view of a chip card illustrating the positioning of the chip module and contact areas.
Figure 4 is an enlarged plan view of a recess formed into a card body according to a first embodiment of the invention.
Figure 5 is a cutaway view of the recess of Figure 4, taken along direction denoted V-V on Figure 4.
Figure 6 is an enlarged plan view of a recess formed into a card body according to a second embodiment of the invention.
Figure 7 is a cutaway view of the recess of Figure 6, taken along direction denoted VII-VII on Figure 6.

### DETAILED DESCRIPTION OF A PREFERRED EMBODIMENT OF THE INVENTION

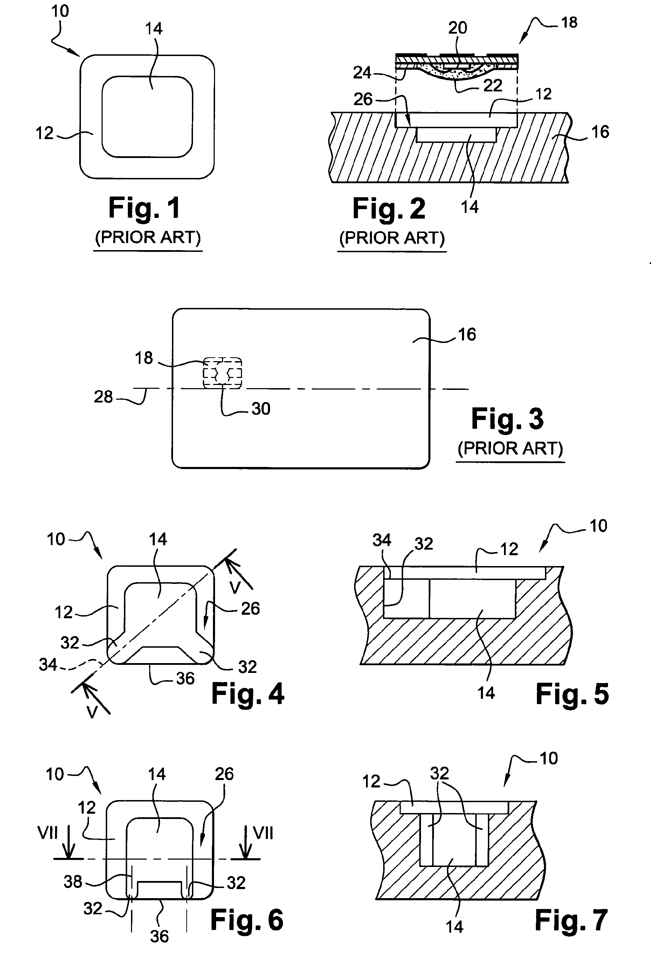

Referring now to the drawings, Figures 1 to 3 illustrate a chip card according to a known design.

Such a card includes a recess 10 comprising an upper cavity 12 and a lower cavity 14 formed in the plastic mass of a card body 16. Recess 10 is generally formed by using a milling machine that removes plastic material in the card body, however alternative techniques may be used which yield the same result, such as laminating a series of pre-punched foils, or moulding the recess when card bodies are made by press injection, all techniques that will be considered as equivalent to machining the card in order to form a recess.

The shape of recess 10 is adapted to receive a chip module 18 which has been manufactured in a separate process. Chip module 18 supports on its backside a chip 20 covered with a mass of protective resin 22. Since the chip module is thicker on its backside where the protected chip 20 is located, the recess must be appropriately formed with a stepped profile in cross-section, namely with upper cavity 12 milled out with the same size and depth as chip module 18, lower cavity 14 being of a smaller length and width so as to define a peripheral shoulder 26 adapted to receive the corresponding peripheral surface 24 of the chip module, with application in-between of a suitable hot-melt adhesive or liquid glue for bonding module 18 to card body 16 on embedding it in recess 10.

The position of recess 10 with respect to the edges of card body 16 is prescribed by ISO 7816-2 standard, which precisely defines the position of the contact areas formed on the frontside of the chip module. It results from this requirement that one of the edges of the recess is located in the vicinity of central line 28 of card body 16. The result is that when the card is bent orthogonally with respect to this central line 28 often a crack 30 appears at this location on the backside of the card, given the lowest thickness due to the presence of recess 10 and also given the fact that central line 28 corresponds to the line of maximum stress when the card is bent across its width. After repeated or excessive bents of the card, the crack propagates through the thickness of the card up to the bottom of the recess on the other side, then propagates longitudinally, eventually leading to a possible breakage of the card.

The apparition of a crack such as a crack 30 is inherent to the reduced thickness of the card in the area of the recess and may hardly be prevented. Rather, the purpose of the invention is not avoiding the formation of the crack but avoiding that such crack, once it has appeared, propagates into and along the card body.

This is obtained by providing one or several stress-relieving areas in the lower cavity in order to deflect and stop the propagation of such crack once it reaches the lower cavity and the recess.

Figures 4 and 5 illustrate a first possible embodiment, with two stress-relieving cavities 32 placed on two adjacent corners of recess 10. Each stress-relieving cavity 32 is formed at the same time as the lower cavity by moving the milling tool diagonally along direction 34 towards the periphery of upper cavity 12 so that, at the corner of recess 10, the depth of the recess shall correspond to the full depth of the lower cavity; in other words, peripheral shoulder 26 is interrupted in this area, which interruption enables relieving the stresses that may appear when the card is flexed.

Preferably, two such stress-relieving cavities 32 are provided on adjacent corners of recess 10, specifically the two adjacent corners located on the same side 36 which is nearest to central line 28 of the card body.

In a second embodiment, illustrated in Figures 6 and 7, stress-relieving cavities 32 are oriented in a direction 38 which is orthogonal to side 36, namely peripheral shoulder 26 is interrupted only on one side of the recess.

As a variant, in both embodiments, the two stress-relieving cavities 32 may be connected together by removing material along side 36, i.e. cavities 32 are end portions of a larger stress-relieving cavity extending along side 36.

The two above-mentioned embodiments are just exemplary embodiments and wide variations in the number, position and geometry of the stress-relieving cavities may be contemplated. The basic concept of the invention is to remove some plastic in the card body at one of several locations appropriately chosen, in order to weaken an area of the card in order to either change the direction of propagation of the breakage, or stop this propagation. The removal of the plastic should not impair the bonding of the module to the card body when embedding it, and preferably should not be visible from the outside (which is the case if the extent of the stress-relieving cavity remains beyond the outline of the chip module).

In particular, the depth of the stress-relieving cavity may be lower, higher or equal to the depth of the lower cavity. The length and the width of the stress-relieving cavity may reach the peripheral outline of the recess, but it may as well go beyond it or stay within it.

The overall shape of the stress-relieving cavity may be linear, curved or circular (e.g. just a simple bore).

The bottom of the cavity may be plan, rounded, conical or angled.

Further, the end portions of the cavity may be either round or angled.

The stress-relieving cavities of the invention may apply to module-receiving recess of various forms, either rectangular, oblong or round.

As far as manufacturing aspects are concerned, the stress-relieving cavities may be formed by any known process such as milling, stamping, cutting, or direct moulding in the case of an injected card body, either on a blank or already printed card body.

The card may be made out from any kind of conventional material, such as PVC, PC, ABS, PS, and ABS-PVC, PC-PVC, PVC-PET blends. It may be either opaque or transparent - the transparent cards being in particular more prone to cracks due to the fact that they are made out in more fragile materials.

## Claims

1. A chip card, comprising a card body (16) with a recess (10) formed therein and a chip module (18) embedded in the recess, wherein said recess includes two concentric cavities with an upper cavity (12) and a lower cavity (14), the upper cavity having a peripheral outline corresponding to the peripheral outer shape of the module and the lower cavity having a peripheral outline the dimensions of which are smaller than the respective dimensions of the upper cavity so as to form a peripheral shoulder (26) supporting the backside (24) of the chip module (18),
wherein said chip card is **characterised by** said recess further including at least one stress-relieving cavity (32) in communication with the inner space of the recess (10).

2. The chip card as defined in claim 1, wherein said at least one stress-relieving cavity comprises a notch (32) in communication with the lower cavity (14).

3. The chip card as defined in claim 2, wherein the recess is located at a position offset with respect to the centre line (28) of the card body (16),
wherein the notch (32) has a distal end and a proximal end defining a main axis (34; 38) extending in the plane of the card body, and wherein the main axis (34; 38) of the notch (32) extends towards said centre line (28).

4. The chip card as defined in claim 2, wherein in a direction orthogonal to the plane of the card body, said notch extends substantially over the depth of the lower cavity (14).

5. The chip card as defined in claim 2, wherein the recess (10) has a substantially square or rectangular shape, and wherein said recess includes at least two distinct stress-relieving cavities (32, 32), said cavities being in communication with the inner space of the recess on the same lateral side (36) of said recess.

6. The chip card as defined in claim 2, wherein the notch (32) has a distal end and a proximal end defining a main axis (34; 38) extending in the plane of the card body, and wherein said proximal end of the notch (32) is in communication with the lower cavity.

7. The chip card as defined in claim 6, wherein said proximal end of the notch (32) is substantially located at the outline of the lower cavity (14).

8. The chip card as defined in claim 6, wherein said distal end of the notch (32) is substantially located at the outline of the upper cavity (12).

9. The chip card as defined in claim 6, wherein the recess (10) has a substantially square or rectangular shape, and wherein said distal end of the notch (32) is substantially located in the vicinity of a corner of the corresponding square or rectangle (Fig. 4).

10. The chip card as defined in claim 6, wherein the recess (10) has a substantially square or rectangular shape, and wherein the main axis (34) of the notch (32) extends substantially diagonally with respect to the shape of the recess (Fig. 4).

11. The chip card as defined in claim 6, wherein the recess has a substantially square or rectangular shape, and wherein the main axis (38) of the notch extends substantially in a direction orthogonal to a lateral side (36) of the recess (Fig. 6).
